# EUROPÄISCHE PATENTSCHRIFT

(11) **EP 4 396 894 B1**
(45) Veröffentlichungstag und Bekanntmachung des Hinweises auf die Patenterteilung: **02.07.2025**
(21) Anmeldenummer: 22773427.4
(22) Anmeldetag: 02.09.2022
(51) Int. Cl.: H01M 50/224, H01M 50/233

(54) **GEHÄUSEANORDNUNG**
HOUSING ASSEMBLY
ENSEMBLE BOITIER

(30) Priorität: 03.09.2021 DE 102021122902
(43) Veröffentlichungstag der Anmeldung: 10.07.2024
(73) Patentinhaber: Muhr und Bender KG, 57439 Attendorn (DE)
(72) Erfinder: MUHR, Thomas, 57439 Attendorn (DE); ELEND, Lutz-Eike, 37133 Friedland (DE); SCHOLEMANN, Björn, 57489 Drolshagen (DE); KOCH, Kevin, 57439 Attendorn (DE); BEGEMANN, Christian, 57439 Attendorn (DE); DE LUCA, Fabian, 58151 Lüdenscheid (DE); DANGER, Elisabeth, 33100 Paderborn (DE)
(74) Vertreter: Neumann Müller Oberwalleney Patentanwälte PartG mbB
(86) Internationale Anmeldenummer: PCT/EP2022/074447
(87) Internationale Veröffentlichungsnummer: WO 2023/031396

(56) Entgegenhaltungen:
- EP-A1- 3 855 525
- WO-A1-2020/187942
- WO-A1-2020/260482
- JP-A- 2021 064 448

## Beschreibung

Die Erfindung betrifft eine Gehäuseanordnung zur Aufnahme elektrischer Speichermittel, insbesondere für ein elektromotorisch antreibbares Kraftfahrzeug.

Ein Elektrofahrzeug umfasst unter anderem eine elektrische Maschine als Antriebsquelle, die mit elektrischen Speichermitteln elektrisch verbunden ist. Im Antriebsmodus wandelt die elektrische Maschine elektrische Energie in mechanische Energie zum Antreiben des Fahrzeugs um. Die elektrischen Speichermittel, die auch als Batterie oder Akkumulator bezeichnet werden, sind in der Regel in einem Batteriekasten aufgenommen, der an der Fahrzeugunterseite mit der Fahrzeugkarosserie befestigt ist.

Aus der gattungsbildenden JP 2021-64448 A ist ein Batteriegehäuse bekannt, das einen Rahmen mit Öffnung und eine Wanne aufweist, die in den Rahmen eingesetzt ist. Der Rahmen ist mittels einer oberen Abdeckung von oben und mittels einer unteren Abdeckung von unten verschlossen. Der Rahmen ist als Gerüst aus mehreren stranggepressten Profilen aus einer Aluminium- oder Magnesiumlegierung zusammengesetzt. Alternativ kann der Rahmen auch aus hochfestem Stahl hergestellt sein. Die Wanne besteht aus einer Aluminium- oder Magnesiumlegierung.

Aus der DE 10 2016 121 247 A1 ist ein Batterieträger mit einer Wanne zur Aufnahme von Batterien und einem die Wanne verschließenden Deckel bekannt. Die Wanne ist ein einstückig durch Umformen hergestelltes dünnwandiges Blechbauteil, das aus einer Aluminiumlegierung mit einer Dehngrenze Rp0,2 größer 250 MPa hergestellt ist. Außen an der Wanne sind Verstärkungsstreben angeordnet und ein umlaufender Rahmen aus Profilen angeordnet.

Aus der DE 10 2019 203 400 A1 ist ein Batteriegehäuse mit einer Wanne bekannt. Entlang der umlaufenden Wannenwand sind Verstärkungen in Form von Profilen aus gehärtetem Stahlmaterial angeordnet.

Aus der WO 2021/009256 A1 ist eine Gehäuseanordnung mit einem Rahmen, einem Boden und einem Deckel bekannt, die einen Aufnahmeraum für elektrische Speichermittel bilden. Der Rahmen umfasst mehrere Rahmenelemente aus einem metallischen Werkstoff mit einer variablen Blechdicke über der Länge. Der Boden ist mit dem Rahmen derart verbunden, dass eine dichte Wanne gebildet ist. Der Boden kann eine integrierte Kühlstruktur aufweisen, durch die ein Kühlmittel hindurchströmen kann.

Aus der DE 10 2018 106 399 A1 ist eine Gehäuseanordnung mit einer Wannenanordnung und einer Deckelanordnung bekannt. Die Wannenanordnung weist ein erstes Formteil und ein zweites Formteil auf, die aus flexibel gewalztem metallischem Material hergestellt und miteinander verbunden sind, so dass sie eine variable Blechdicke in Längsrichtung des jeweiligen Formteils aufweisen.

Aus der DE 10 2016 120 826 A1 ist ein Batteriegehäuse für ein elektromotorisch angetriebenes Fahrzeug bekannt. Das Batteriegehäuse umfasst ein Wannenteil mit einem Boden und daran angeformten Seitenwänden und eine das Wannenteil außenseitig umgebende Rahmenstruktur, die eine Hohlkammer bildet.

Der vorliegenden Erfindung liegt die Aufgabe zugrunde, eine Gehäuseanordnung zur Aufnahme elektrischer Speichermittel vorzuschlagen, die gute Dichtigkeitseigenschaften, eine hohe Beständigkeit gegen Korrosion und ein geringes Gewicht aufweist.

Erfindungsgemäß wird eine Gehäuseanordnung zur Aufnahme elektrischer Speichermittel für einen Elektroantrieb eines elektrisch antreibbaren Kraftfahrzeugs vorgeschlagen, umfassend: eine Bodenwanne mit einem Boden und einem umlaufend geschlossenen Wannenrahmen, der aus einem metallischen Werkstoff durch Umformen hergestellt ist; einen Strukturrahmen, der mehrere zu einem umlaufenden Rahmen miteinander verbundene Rahmenelemente und mehrere sich zwischen zwei gegenüberliegenden Rahmenelementen erstreckende Verstärkungselemente umfasst, wobei die Rahmenelemente und die Verstärkungselemente jeweils aus einem Stahlwerkstoff hergestellt und miteinander zu dem Strukturrahmen verbunden sind, und wobei der Strukturrahmen in die Bodenwanne eingesetzt und mit dieser verbunden ist; wobei die Streckgrenze eines Stahlwerkstoffs des Strukturrahmens mindestens 10 % größer ist als die Streckgrenze des metallischen Werkstoffs des Wannenrahmens; und einen Deckel, der mit dem Wannenrahmen lösbar verbindbar ist, wobei der Wannenrahmen und der Deckel einen Aufnahmeraum für elektrische Speichermittel einschließen.

Ein Vorteil liegt darin, dass die einzelnen Komponenten der Gehäuseanordnung hinsichtlich ihrer Ausgestaltung gut an die unterschiedlichen technischen Anforderungen angepasst werden können. So weist der Wannenrahmen, aufgrund der umformenden Herstellung aus einem umformbaren Werkstoff besonders gute Dichtungs- und Korrosionsschutzfunktionen auf. Denn der Wannenrahmen bildet den Außenbereich der Gehäuseanordnung, so dass hier keine weiteren Schweißnähte zum Befestigen anderer Komponenten erforderlich sind. Alle anderen Komponenten, die im Inneren des Wannenrahmens liegen, insbesondere der Strukturrahmen, sind somit bestmöglich vor Korrosion geschützt. Die mittlere Blechdicke des Wannenrahmens kann auf ein für diese technischen Anforderungen erforderliches Minimum reduziert werden. Generell sind mittlere Blechdicken des Wannenrahmens zwischen insbesondere 1,0 mm und 3,0 mm möglich, wobei eine reduzierte Blechdicke beispielsweise kleiner als 1,4 mm, oder sogar kleiner als 1,2 mm sein kann. Der Wannenrahmen ist vom Strukturrahmen funktional entkoppelt und muss somit keine strukturmechanischen Aufgaben übernehmen. Damit können Materialgüte, Blechdicke und gegebenenfalls Beschichtung der Bodenwanne auf die Funktionen Dichten und Korrosionsschutz optimiert werden. So kann eine gute Funktionserfüllung und ein geringes Gewicht dieses großen, und damit besonders gewichtsrelevanten Bauteils erzielt werden.

Der Strukturrahmen beziehungsweise zumindest einzelne Elemente davon, können demgegenüber in Bezug auf die strukturmechanischen Aufgaben respektive Festigkeit und/oder Steifigkeit optimiert werden, ohne Kompromisse aufgrund des Korrosionsschutzes eingehen zu müssen. Die Dimensionierung der einzelnen Rahmenelemente und/oder Verstärkungselemente kann individuell in Abhängigkeit von den zu erwartenden Belastungen erfolgen. Durch gezielte Reduktion der Dicke der Rahmenteile und/oder Verstärkungselemente in geringer belasteten Bereichen kann Material eingespart werden, so dass die Gehäuseanordnung letztlich ohne Einbußen in Bezug auf die mechanischen Eigenschaften ein geringes Gewicht aufweist und somit kostengünstig hergestellt werden kann. Durch gezielte Erhöhung der Dicke der Rahmenteile und/oder Verstärkungselemente in höher belasteten Bereichen, insbesondere in crashrelevanten Bereichen, kann eine höhere Festigkeit erreicht werden, so dass die Gehäuseanordnung eine hohe Last aufnehmen kann ohne zerstört zu werden.

Im Kontext der vorliegenden Offenbarung kann die "mittlere Dicke" eines Bauteils mit variabler Dicke beispielsweise die über der Länge des jeweiligen Bauteils kumulierte mittlere Dicke sein, oder die mittlere Dicke zwischen einer größten und einer kleinsten absoluten Dicke des Bauteils. Bei Bauteilen mit konstanter Dicke über der Länge ist die mittlere Dicke gleich der Nenndicke.

Das Blechmaterial des Wannenrahmens kann eine Bruchdehnung von vorzugsweise mindestens 15 % aufweisen. Dieser Wert kann sich auf das Ausgangsmaterial beziehen, das heißt vor dem Umformen des Blechmaterials zum Wannenrahmen, oder auch auf den umgeformten Wannenrahmen als fertiges Produkt. Im Kontext der vorliegenden Offenbarung beschreibt die Bruchdehnung A die auf die Anfangsmesslänge L0 bezogene bleibende Längenänderung (Lu-L0) nach dem Bruch der Probe, das heißt A = (Lu-L0)/L0 * 100%. Die Bruchdehnung A des Werkstoffs des Wannenrahmens ist vorzugsweise größer als die eines Werkstoffs des Strukturrahmens. Möglichkeiten zur Ermittlung der Bruchdehnung und Durchführung der Prüfung sind beispielsweise in DIN EN ISO 6892-1 beziehungsweise ASTM E8/E8M beschrieben. Insbesondere kann eine Zugprobe mit rechteckigem Querschnitt beziehungsweise für Flacherzeugnisse verwendet werden. Die Anfangsmesslänge L0 der Probe kann beispielsweise 50 mm betragen, für welche die angegebene Bruchdehnung A von größer gleich 15% mindestens gilt, wobei andere Probenlängen gemäß DIN EN ISO 6892-1 oder ASTM E8/E8M ebenso möglich sind.

Der Wannenrahmen kann beispielsweise aus einem gut umformbaren Stahlwerkstoff oder Leichtmetall, wie Aluminium oder einer Aluminiumlegierung, als einstückiges Umformteil hergestellt werden. Dabei hat der verwendete Werkstoff insbesondere eine Zugfestigkeit und/oder Streckgrenze (Rp0,2) von weniger als 450 MPa. Die Herstellung des Wannenrahmens erfolgt vorzugsweise aus einer einteiligen Blechplatine, die durch Umformoperationen, insbesondere durch Tiefziehen, und gegebenenfalls Schneidoperationen zum Wannenrahmen bearbeitet wird. Bei besonders großen Wannenrahmen können gegebenenfalls mehrere einzelne Blechelemente zunächst separat hergestellt und miteinander stoffschlüssig verbunden werden, beispielsweise mittels Schweißen, bevor dieser Platinenverbund dann zum Wannenrahmen als ein Teil umgeformt wird. Im Rahmen des Umformens wird der Wannenrahmen mit angeschrägten Wandbereiche hergestellt, die eine Auszugsschräge bilden.

Nach einer ersten Ausführungsform kann der Wannenrahmen einteilig mit integriertem Boden hergestellt sein. In diesem Fall bilden Wannenrahmen und Boden eine einteilige Bodenwanne, die entsprechend gas- und flüssigkeitsdicht ist. Die Bodenwanne kann optional eine Kühlstruktur aufweisen. Die Herstellung einer Bodenwanne mit integraler Kühlstruktur kann beispielsweise durch Rollbonden von zwei Alumimiumbändern, anschließendem Vereinzeln zu Platinenverbunden, Umformen zur Wannenform, insbesondere mittels Tiefziehen, und Aufblasen der Hohlräume erfolgen. Bei dieser Ausführung bilden der Wannenrahmen und der Boden eine einteilige Bodenwanne aus demselben Material.

Nach einer abgewandelten Ausführungsform können der Wannenrahmen und der Boden zunächst auch separat hergestellt und anschließend abdichtend miteinander verbunden sein. Der Boden weist dabei die integrierte Kühlstruktur auf, durch die ein Kühlmittel hindurchströmen kann. Wannenrahmen und Kühlboden können beispielsweise flüssigkeits- und gasdicht miteinander verbunden, was beispielsweise mittels einer hybriden Verbindungstechnik aus Kleben zusammen mit Reibschweißen oder Nieten erfolgen kann. Bei dieser Ausführungsform können Wannenrahmen und Kühlboden aus unterschiedlichen Materialien hergestellt werden, beispielsweise der Wannenrahmen aus einem kaltumformbaren Stahl und der Kühlboden aus Aluminium oder einer Aluminiumlegierung.

Der Kühlboden beziehungsweise die Kühlstruktur kann aus mehreren mittels Rollbonding miteinander verbundenen Aluminiumbändern hergestellt sein. Die Aluminiumbänder werden durch Erwärmen und Walzen in Verbindungsbereichen miteinander verbunden und zu einzelnen Platinen abgelängt. Anschließend werden Hohlbereiche dadurch hergestellt, dass die außerhalb der Verbindungsbereiche liegenden Bereiche unter Druck gesetzt werden, so dass sie sich zu Hohlräumen verformen. Die Hohlbereiche des Kühlbodens sind vorzugsweise nur in einem von den zwei aufeinander liegenden Aluminiumblechen gebildet, das heißt ein Blechelement ist eben, während das andere Blechelement verformt ist. Dabei können das ebene Blechelement und das hiermit verbundene umgeformte Blechelement dieselbe oder unterschiedliche Blechdicken aufweisen, die beispielsweise zwischen 0,8 mm und 2,0 mm liegen kann. Der Kühlboden kann aus einem integralen Rollbonding-Element oder mehreren miteinander verbundenen Rollbonding-Elementen hergestellt sein.

Der Wannenrahmen kann im Querschnitt betrachtet ein Z-förmiges Profil aufweisen, mit einem unteren Flanschbereich, der in den Boden übergeht oder mit diesem verbunden ist, dem umlaufenden Wandbereich, der sich vom Boden weg erweitert, und einem daran anschließenden oberen Flanschbereich, der zum Befestigen des Deckels dient. Die Erweiterung des Wandbereichs in Richtung oberem Flanschbereich dient als Auszugsschräge für das Umformungswerkzeug.

Der obere Flanschbereich bildet insbesondere eine ebene Dichtfläche zum abdichtenden Verbinden mit einer Gegenfläche des Deckels, der mit dem Wannenrahmen insbesondere lösbar verbindbar ist. Der untere Flanschbereich geht bei der einteiligen Ausführung integral in den Boden über oder bildet bei der zweiteiligen Ausführung eine ebene Dichtfläche zum abdichtenden Verbinden mit einer Gegenfläche des Kühlbodens.

Der Strukturrahmen umfasst mehrere Rahmenelemente, die zu einem umlaufenden Rahmen zusammengesetzt sind, und mehrere Verstärkungselemente, die sich zwischen zwei seitlichen Rahmenelementen erstrecken beziehungsweise diese gegeneinander abstützen. Die Rahmenelemente und/oder Verstärkungselemente können in Bezug auf Ihre Festigkeit und Steifigkeit an die jeweiligen technischen Anforderungen angepasst werden. Beispielsweise können zumindest einige der Rahmenelemente und/oder zumindest einige der Verstärkungselemente eine variable Blechdicke über der Länge des jeweiligen Elements aufweisen.

Je nach spezifischen technischen Anforderungen können die Rahmenelemente in Form eines zweiteiligen Hohlprofils aus einem C-förmigen Außenprofil und einem hiermit verbundenen C-förmigen Innenprofil, oder in Form eines einteiligen Profils gestaltet sein. Durch Verwendung eines zweiteiligen beziehungsweise Hohlprofils können besonders hohe Biegewiderstandsmomente erreicht werden, die je nach Werkstoff und Blechdicke beispielsweise über 6500 mm3 betragen können.

Die Rahmenelemente und die Verstärkungselemente können aus demselben oder unterschiedlichem Stahlwerkstoff hergestellt sein. Beispielsweise können zumindest einige oder alle Rahmenelemente des Strukturrahmens aus einem martensitisch härtbaren Stahl hergestellt sein, insbesondere aus einem mangan-borlegierten Vergütungsstahl, wie beispielsweise 17MnB3, 22MnB5, 26MnB5 oder 34MnB5, wobei andere Stahlgüten ebenso möglich sind. Zumindest einige, vorzugsweise alle Rahmenelemente des Strukturrahmens können mit einer Korrosionsschutzschicht versehen sein, insbesondere aus einer Aluminiumlegierung. Diese bietet einen guten Schutz gegen Korrosion. Die endgültige Form eines aus martensitisch härtbarem Stahlwerkstoff hergestellten Bauteils wird vorzugsweise im Wege des Warmumformens erzeugt, das auch als Presshärten bezeichnet werden kann. Hierfür wird das vorbeschichtete Ausgangsteil, das eine Zugfestigkeit von mindestens 500 MPa aufweisen kann, zunächst auf Austenitisierungstemperatur erhitzt, dann in heißem Zustand in das Warmformwerkzeug eingelegt, darin umgeformt und schnell abgekühlt, so dass ein martensitisches Gefüge entsteht. Das fertig hergestellte, das heißt umgeformte und gehärtete Bauteil kann eine Endzugfestigkeit von mindestens 900 MPa aufweisen, vorzugsweise mindestens 1300 MPa.

Die Verstärkungselemente können insbesondere aus einem kaltgewalzten Stahl, beispielsweise einem mikrolegierten Stahl, wie HC 420, einem Dualphasenstahl, wie DP800 oder DP1000, oder einem Komplexphasenstahl hergestellt sein. Diese Stähle werden im Wege der Kaltumformung aus einer Platine zum fertigen Bauteil umgeformt. Kaltformstähle lassen sich gut umformen, so dass sich auch komplexere Geometrien der Verstärkungselemente erzeugen lassen. Die Verstärkungselemente können ferner mit einer Korrosionsschutzschicht versehen sein, insbesondere aus einer Zinklegierung. Es ist aber auch die Verwendung eines Warmformstahls möglich, wie im Zusammenhang mit den Rahmenelementen beschrieben. In diesem Fall wird vorzugsweise eine Aluminiumlegierung als Korrosionsschutzschicht verwendet.

Die Verstärkungselemente können Quer- und/oder Längsträger umfassen, die zwischen den Rahmenelementen angeordnet und mit diesen fest verbunden sind, beispielsweise mittels Schweißen. Durch die Verstärkungselemente sind die hiermit verbundenen Rahmenelemente gegeneinander abgestützt. Insgesamt ist so ein robuster Strukturrahmen gebildet, der als vorgefertigte Baueinheit in die Bodenwanne einsetzbar und mit dieser verbindbar ist.

Nach einer möglichen Ausführungsform können zumindest einige der Verstärkungselemente eingebrachte Gewinde aufweisen, die insbesondere durch Loch-, Tiefzieh-, Präge- und/oder Schneidprozesse hergestellt sein können. Die Gewinde können zur Befestigung eines Deckelteils und/oder von zwischen den Verstärkungselementen einsetzbaren Batteriemodulen dienen beziehungsweise zu diesem Zweck ausgeführt sein.

Um die Gehäuseanordnung an einer Fahrzeugkarosserie zu befestigen, können mehrere Durchschraubungsanordnungen vorgesehen sein, die jeweils eine abgedichtete Stützhülse aufweisen kann, die ein Verstärkungselement durchdringen. Die Anzahl der Durchschraubungen der Gehäuseanordnung kann beispielsweise je Verstärkungselement 2 bis 5 betragen.

Je nach technischen Anforderungen können zumindest einige Verstärkungselemente eine variable Blechdicke über einer längsten Länge aufweisen, wobei die Blechdicke insbesondere im Bereich der eingeformten Gewinde und/oder im Bereich der Durchschraubungen und/oder im Bereich der endseitigen Befestigungsabschnitte, die mit dem Rahmen verbunden sind, erhöht sein kann.

Der Deckel kann ein- oder mehrteilig gestaltet sein, jeweils optional mit variabler oder einheitlicher Materialdicke.

In verbundenem Zustand des Deckels auf der Wannenrahmen-Boden-Einheit ist eine geschlossene Gehäuseanordnung gebildet, die in sich dicht ist. Ein Austreten von Batterieflüssigkeit aus der Gehäuseanordnung beziehungsweise ein Eindringen von Schmutz hinein wird effektiv vermieden.

Bevorzugte Ausführungsformen werden nachstehend anhand der Zeichnungsfiguren erläutert. Hierin zeigt:
- Figur 1A: eine erfindungsgemäße Gehäuseanordnung zur Aufnahme elektrischer Speichermittel in perspektivischer Explosionsdarstellung in einer ersten Ausführungsform;
- Figur 1B: ein Detail der Gehäuseanordnung aus Figur 1A im Querschnitt;
- Figur 2A: ein Verstärkungselement für eine erfindungsgemäße Gehäuseanordnung als Einzelheit in perspektivischer Darstellung;
- Figur 2B: das Verstärkungselement gemäß Figur 2A im Querschnitt;
- Figur 3A: die Gehäuseanordnung aus Figur 1A in Draufsicht;
- Figur 3B: ein Detail der Gehäuseanordnung aus Figur 3A in vergrößerter Darstellung;
- Figur 3C: die Gehäuseanordnung gemäß Schnittlinie 3C-3C aus Figur 3B;
- Figur 4A: eine erfindungsgemäße Gehäuseanordnung in perspektivischer Explosionsdarstellung in einer weiteren Ausführungsform;
- Figur 4B: ein Detail der Gehäuseanordnung aus Figur 4A im Querschnitt;
- Figur 5: eine erfindungsgemäße Gehäuseanordnung zur Aufnahme elektrischer Speichermittel in perspektivischer Explosionsdarstellung in einer weiteren Ausführungsform;
- Figur 6: eine Bodenwanne und Strukturrahmen in einer abgewandelten Ausführungsform für eine erfindungsgemäße Gehäuseanordnung in perspektivischer Explosionsdarstellung;
- Figur 7A: eine erfindungsgemäße Gehäuseanordnung in perspektivischer Explosionsdarstellung in einer weiteren Ausführungsform;
- Figur 7B: die Bodenwanne aus Figur 7A als Einzelheit in perspektivischer Darstellung von unten.

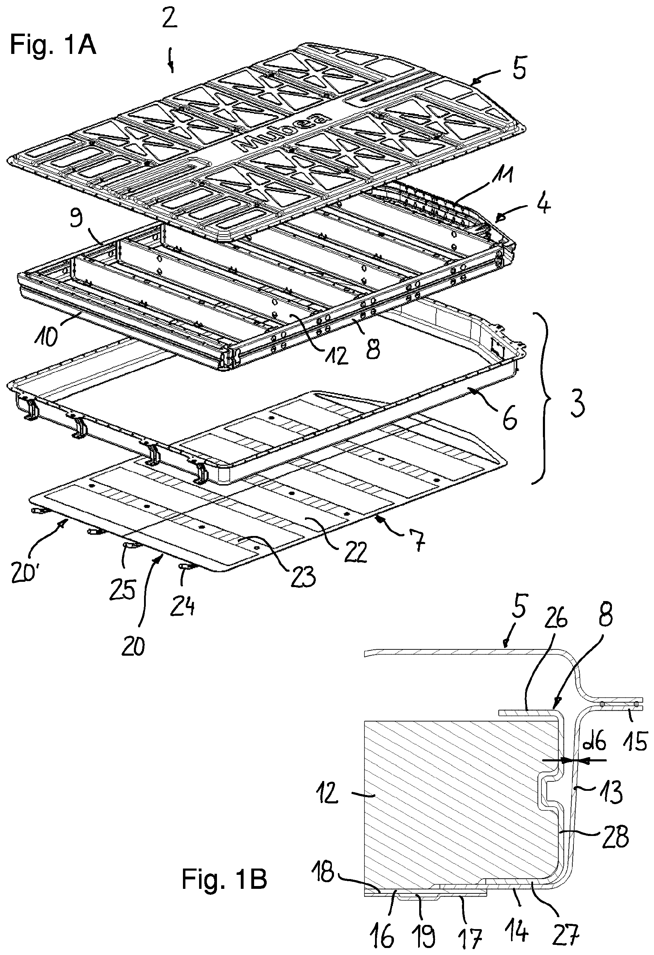

Die Figuren 1A und 1B, gemeinsam auch als Figur 1 bezeichnet, zeigen eine erfindungsgemäße Gehäuseanordnung 2, in welcher elektrische Speichermittel (nicht dargestellt) aufgenommen werden können, in einer ersten Ausführungsform. Eine solche Gehäuseanordnung 2 kann mit der Karosserie eines Kraftfahrzeugs verbunden werden. Die elektrischen Speichermittel dienen zum Speichern elektrischer Energie, mit welcher ein Elektromotor des elektrisch antreibbaren Kraftfahrzeugs mit Strom versorgt werden kann; sie können auch als Batteriemodule bezeichnet werden.

Die Gehäuseanordnung 2 weist eine Bodenwanne 3, einen Strukturrahmen 4 und einen Deckel 5 auf. Bei der vorliegenden Ausführungsform ist die Bodenwanne 3 zweiteilig zusammengesetzt und umfasst einen umformend hergestellten, einteiligen Wannenrahmen 6 und einen hiermit abdichtend verbundenen Boden 7. Die Verbindung kann beispielsweise mittels Schweißen und/oder Kleben erfolgen. In gefügtem Zustand bilden der Boden 7 und der Wannenrahmen 6 gemeinsam die Bodenwanne 3 zur Aufnahme des Strukturrahmens 4 und der Speichermittel. Der Strukturrahmen 4 umfasst mehrere zu einem umlaufenden Rahmen miteinander verbundene Rahmenelemente 8, 9, 10, 11 und mehrere sich zwischen zwei gegenüberliegenden Rahmenelementen 8, 9 erstreckende Verstärkungselemente 12. Die Rahmenelemente 8, 9, 10, 11 und die Verstärkungselemente 12 sind aus einem Stahlwerkstoff hergestellt und miteinander zu dem Strukturrahmen 4 verbunden. Die Verbindung kann beispielsweise mittels Schweißen und/oder Schrauben erfolgen. Der Strukturrahmen 4 wird in die Bodenwanne 3 eingesetzt und mit dieser verbunden. Der Deckel 5 ist lösbar mit dem Wannenrahmen 6 verbindbar, beispielsweise mittels Schraubverbindungen (nicht gezeigt). Es wird insgesamt ein Gehäuse mit einem innenliegenden Strukturrahmen 4 erreicht, der durch die außenliegende Bodenwanne 3 beziehungsweise den Deckel 5 vor Umwelteinflüssen geschützt ist.

Nachstehend wird auf weitere Einzelheiten der Baugruppen Bodenwanne 3, Strukturrahmen 4 und Deckel 5 eingegangen.

Der Wannenrahmen 6 ist einteilig mittels Umformen hergestellt, beispielsweise durch Tiefziehen und anschließendes Beschneiden einer Blechplatine. Dabei werden die Wandbereiche 13 des Wannenrahmens 6 insbesondere mit Auszugsschrägen für das Umformwerkzeug hergestellt. Der Wannenrahmen kann beispielsweise einem gut umformbaren Stahlwerkstoff oder einem Leichtmetall, wie Aluminium oder einer Aluminiumlegierung, hergestellt werden, wobei der verwendete metallische Werkstoff eine Bruchdehnung (A50) von mindestens 15 % haben sollte. Die Zugfestigkeit und/oder Streckgrenze (Rp0,2) beträgt vorzugsweise weniger als 450 MPa. Die mittlere Blechdicke d6 des Wannenrahmens 6 beträgt vorzugsweise weniger als 1,4 mm, insbesondere weniger als 1,2 mm. Die mittlere Dicke kann sich beispielsweise auf die über der Gesamterstreckung Wannenrahmens kumulierte mittlere Dicke beziehen, oder die mittlere Dicke zwischen einer größten und einer kleinsten absoluten Dicke des Wannenteils.

Wie insbesondere in Figur 1B erkennbar, hat der Wannenrahmen 6 im Querschnitt betrachtet ein Z- beziehungsweise S-förmiges Profil, bei dem ein unterer Flanschbereich 14 und ein oberer Flanschbereich 15 in entgegengesetzte Richtungen vom Wandbereich 13 abgebogen sind. Dabei ist der untere Flanschbereich 14 nach innen abgebogen und weist eine insbesondere ebene Dichtfläche zum abdichtenden Verbinden mit dem Boden 7 auf. Der obere Flanschbereich 15 ist nach außen abgebogen und weist eine insbesondere ebene Dichtfläche zum abdichtenden Verbinden mit einer Gegenfläche des Deckels 5 auf, der mit dem Wannenrahmen 6 über eine Vielzahl von über den Umfang verteilten Schraubverbindungen lösbar verbindbar ist.

Der Boden 7 weist eine integrierte Kühlstruktur auf und kann insofern auch als Kühlboden bezeichnet werden. Im gefügten Zustand bilden der Boden 7 und der Wannenrahmen 6 gemeinsam eine flüssigkeits- und gasdichte Bodenwanne 3. Der Kühlboden ist aus mehreren mittels Rollbonding miteinander verbundenen Blechelementen 16, 17, insbesondere aus Aluminium oder einer Aluminiumlegierung hergestellt. Beim Rollbonding werden zwei aufeinander liegende Metallbänder, von denen eines mit Trennmittel versehen wird, durch Erwärmen und Walzen in Verbindungsbereichen 18 miteinander verbunden. Das Trennmittel, das im Siebdruck-Verfahren aufgebracht werden kann, beschreibt die Geometrie der späteren Hohlräume. In den nicht mit Trennmittel versehenen Bereichen sind die beiden Blechlagen stoffschlüssig miteinander verbunden. Die nicht miteinander verbundenen Bereiche werden unter Druck gesetzt, so dass sich diese verformen und die Hohlbereiche 19 bilden. Die Hohlbereiche 19 sind vorliegend nur im unteren der aufeinander liegenden Blechelemente gebildet. Das obere Blechelement 16 bleibt eben, so dass entsprechend eine ebene Aufstandsfläche für die Batteriemodule gebildet ist. Die Blechdicke der Blechelemente 16, 17 kann beispielsweise zwischen 0,8 und 2,0 mm betragen. Für eine hohe Kühlleistung können die Blechelemente 16, 17 eine hohe Wärmeleitfähigkeit von insbesondere größer als 100 W/mK aufweisen.

Wie insbesondere aus Figur 1A hervorgeht, hat der Boden 7 mehrere Kühlbereiche 22, welche in montiertem Zustand durch die Verstärkungselemente 12 räumlich voneinander getrennt sind. Die Anzahl der Kühlbereiche 22 kann an die Anzahl der Speicherelemente angepasst sein. Die Verstärkungselemente 12 sind jeweils in Verbindungsbereichen 23 zwischen zwei benachbarten Kühlbereichen 22 mit dem Boden 7 verbunden. Es sind ferner Anschlüsse 24, 25 zum Zirkulieren von Kühlmittel durch die Hohlbereiche 19 erkennbar. Bei der vorliegenden Ausführung ist der Boden 7 aus zwei miteinander verbundenen, rollgebondeten Bodenelementen 20, 20' zusammengesetzt, und umfasst entsprechend zwei Kühlstrukturen. Es ist aber auch eine Ausführung aus einem einzigen rollgebondetem Bodenelement mit einer Kühlstruktur möglich.

Die Verstärkungselemente 12 bilden Verbindungsstege zwischen den beiden einander gegenüberliegenden Rahmenelementen 8, 9, welche gemeinsam mit hierzu quer verlaufenden endseitigen Rahmenelementen 10, 11 einen geschlossenen Rahmen bilden. Die Anzahl der Verstärkungselemente 12 kann an die Anzahl der Speicherelemente angepasst sein. Die Verstärkungselemente 12 verlaufen vorliegend quer zur längsten Länge des Gehäuses und können somit auch als Querträger oder Querstreben bezeichnet werden. Es sind auch Ausführungen mit Längsträgern möglich.

Wie insbesondere in Figur 1B erkennbar, haben die Rahmenelemente 8, 9, 10, 11 oder zumindest eine Teilzahl davon in der vorliegenden Ausführungsform ein im Querschnitt C-förmiges Profil. Dabei sind ein oberer und ein unterer Flanschabschnitt 26, 27 beide in dieselbe Richtung vom Wandabschnitt 28 nach innen abgebogen. Die Verstärkungselemente 12 können ein im Querschnitt U-förmiges Profil mit bodenseitigen Flanschen zur Befestigung mit der Bodenwanne 3 und endseitigen Flanschen zur Verbindung mit den seitlichen Rahmenelementen 8, 9 aufweisen. Die Verstärkungselemente 12 greifen mit ihren Enden in den durch das C-Profil gebildeten nach innen offenen Hohlraum der Rahmenelemente 8, 9 ein und sind mit diesen befestigt, beispielsweise verschweißt.

Die Rahmenelemente 8, 9, 10, 11, oder zumindest eine Teilzahl davon, werden vorzugsweise aus einem warmformbaren Stahl hergestellt, insbesondere einem martensitisch härtbaren Vergütungsstahl, wie 17MnB3, 22MnB5, 26MnB5 oder 34MnB5. Dabei werden die Platinen im Wege der Warmumformung zum fertigen Bauteil umgeformt und gehärtet, wodurch eine besonders hohe Festigkeit der Elemente erreicht wird.

Die Verstärkungselemente 12, oder zumindest eine Teilzahl davon, sind vorzugsweise aus einem kaltformbaren Stahl hergestellt, insbesondere einem kaltgewalzten mikrolegierten Stahl, wie HC 420, einem Dualphasenstahl, wie DP800 oder DP1000, oder einem Komplexphasenstahl. Diese Stähle werden im Wege der Kaltumformung aus einer Platine zum fertigen Bauteil umgeformt. Alternativ können die Verstärkungselemente 12 auch aus einem warmformbaren Stahl hergestellt werden, wie zuvor beschrieben.

Für eine besonders gute Korrosionsbeständigkeit können die Rahmenelemente 8, 9, 10, 11 und/oder Verstärkungselemente 12 des Strukturrahmens 4 eine Korrosionsschutzschicht aufweisen, insbesondere aus einer zinkbasierten Legierung bei Kaltformstählen oder einer aluminiumbasierten Legierung bei Warmformstählen. Die Korrosionsschutzschicht wird vorzugsweise vor dem Umformprozess auf das Stahlband aufgebracht.

Die Rahmenelemente 8, 9, 10, 11 und die Verstärkungselemente 12 können separat hergestellt und anschließend miteinander verbunden werden, beispielsweise durch Schweißen. Sie bilden gemeinsam den Strukturrahmen 4, der vorliegend eine leiterförmige Struktur aufweist, ohne darauf eingeschränkt zu sein. Je nach technischen Anforderungen können zumindest einige Verstärkungselemente 12 und/oder zumindest einige der Rahmenelemente 8, 9, 10, 11 unterschiedliche Blechdicken über der jeweiligen Länge aufweisen. Der Strukturrahmen 4 kann insbesondere als vorgefertigte beziehungsweise selbsttragende Baueinheit in die Bodenwanne 3 eingesetzt und mit dieser verbunden werden, beispielsweise mittels Verschweißungen oder Verschraubungen.

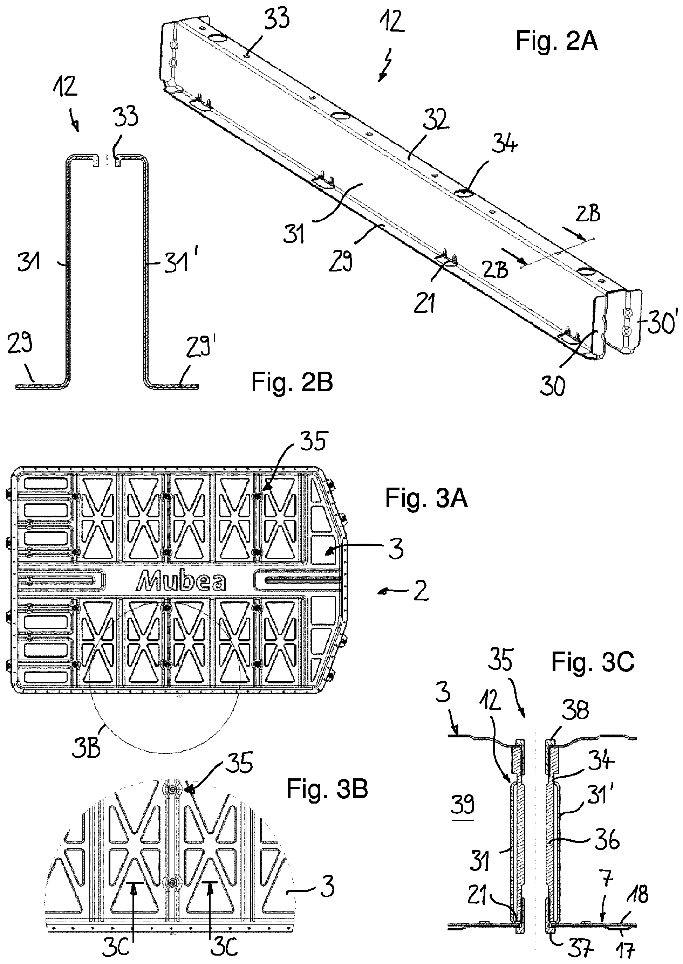

Die Figuren 2A und 2B zeigen eine mögliche Ausführungsform eines Verstärkungselementes 12. Wie insbesondere in Figur 2B erkennbar hat das Verstärkungselement 12 ein U-förmiges Profil mit zwei seitlich abstehenden Flanschabschnitten 29, 29' zur Befestigung mit der Bodenwanne 3. An den einander entgegengesetzten Enden haben die Verstärkungselemente seitlich abgebogene Endflansche 30, 30' zur Befestigung mit den längsverlaufenden Rahmenelementen 8, 9. Optional können die Verstärkungselemente 12 eine Mehrzahl von im Bodenabschnitt 32 eingearbeiteten Gewinden 33 aufweisen, wobei die Gewinde durch Loch-, Tiefzieh-, Präge- und/oder Schneidprozesse hergestellt sein können. Die Gewinde 33 dienen zur Befestigung des Deckels 5 und/oder von Batteriemodulen. Die Blechdicke der Querträger ist insbesondere in den Bereichen der eingeformten Gewinde und/oder der Endflansche 30, 30' vorzugsweise erhöht. Ferner können die Verstärkungselemente 12 optional eine Mehrzahl von Durchgangsöffnungen 34 im Bodenabschnitt 32 aufweisen, durch welche Durchschraubungen vom Deckel zum Boden ermöglicht werden, was nachstehend anhand von Figur 3 näher erläutert wird.

Die Figuren 3A, 3B und 3C, gemeinsam auch als Figur 3 bezeichnet, zeigen eine mögliche Ausführungsform zur Befestigung der erfindungsgemäßen Gehäuseanordnung 2 an eine Fahrzeugkarosserie, ohne darauf eingeschränkt zu sein. Danach können mehrere Durchschraubungsanordnungen 35 vorgesehen sein, durch die jeweils eine Schraube vom Boden zum Deckel durch die Gehäuseanordnung 2 hindurch geführt werden kann, um diese an der Fahrzeugkarosserie zu befestigen.

Die Durchschraubungsanordnungen 35 weisen jeweils eine Innenhülse 36 auf, die in Durchgangsöffnungen 34 der Verstärkungselemente 12 eingesteckt und zwischen den zwei Schenkeln 31, 31' angeordnet sind. Die Innenhülsen 36 stützen sich nach unten gegen den Boden 7 ab und sind mit diesem über eine untere Befestigungshülse 37 befestigt. Die Verstärkungselemente 12 können im Bereich der Befestigungshülse 37 Durchbrüche mit nach innen gezogenen Stützflanschen 21 aufweisen. Am oberen Ende sind die Innenhülsen 36 über entsprechende Befestigungshülsen 38 mit dem Deckel 5 verschraubt. Die Verbindungen zwischen der Innenhülse 36 und dem Boden 7 einerseits und dem Deckel 5 andererseits sind abgedichtet, so dass keine Feuchtigkeit oder Schmutz in den Gehäuseinnenraum 39 eindringen kann. Die Anzahl der Durchschraubungsanordnungen 35 je Querträger beträgt beispielsweise maximal 5.

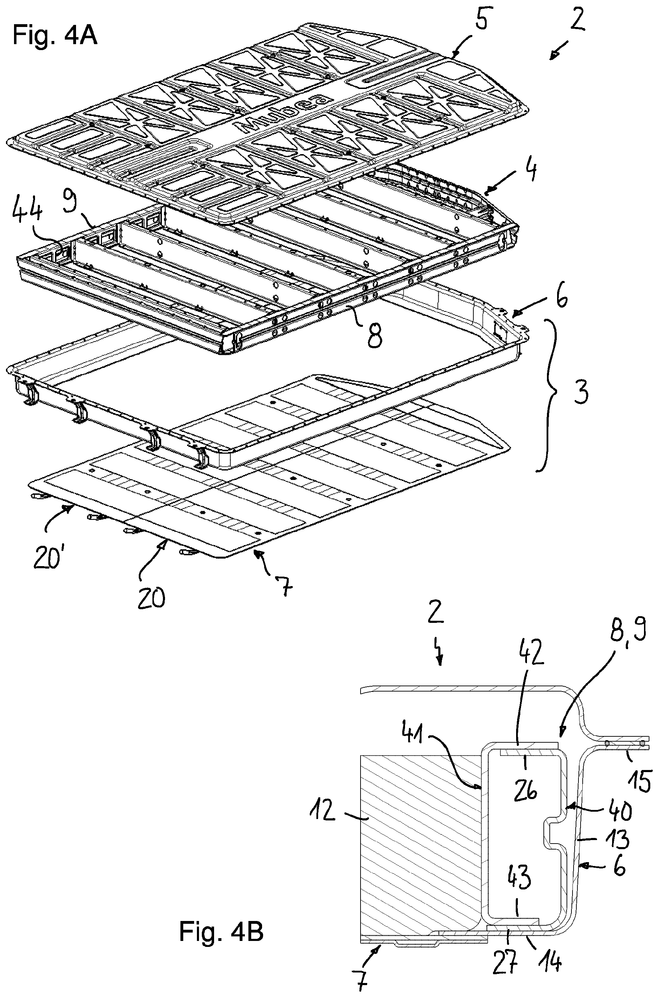

Die Figuren 4A und 4B, gemeinsam auch als Figur 4 bezeichnet, zeigen eine erfindungsgemäße Gehäuseanordnung 2 in einer abgewandelten Ausführungsform. Diese entspricht weitestgehend der Ausführungsform gemäß den Figuren 1 bis 3, so dass hinsichtlich der Gemeinsamkeiten auf die obige Beschreibung Bezug genommen wird. Dabei sind gleiche beziehungsweise einander entsprechende Bauteile mit gleichen Bezugszeichen versehen wie in den obigen Figuren 1 bis 3.

Der einzige Unterschied der vorliegenden Ausführungsform gemäß Figur 4 liegt in der Gestaltung der Rahmenelementen 8, 9, welche in Form eines zweiteiligen Hohlprofils aus einem C-förmigen Außenprofil 40 und einem hiermit verbundenen C-förmigen Innenprofil 41 gestaltet sind. Das Außenprofil 40 und das Innenprofil 41 sind mit ihren oberen Flanschabschnitten 26, 42 und unteren Flanschabschnitten 27, 43 aufeinander zu gerichtet, so dass im Querschnitt betrachtet ein Hohlraum entsteht. Die Innenprofile 41 können über ihre Länge mehrere gewichtsreduzierende Öffnungen 44 aufweisen. Insgesamt haben die Rahmenelemente 8, 9 auf zwei Profilen eine größere Festigkeit, Steifigkeit beziehungsweise ein besonders hohes Biegewiderstandsmoment.

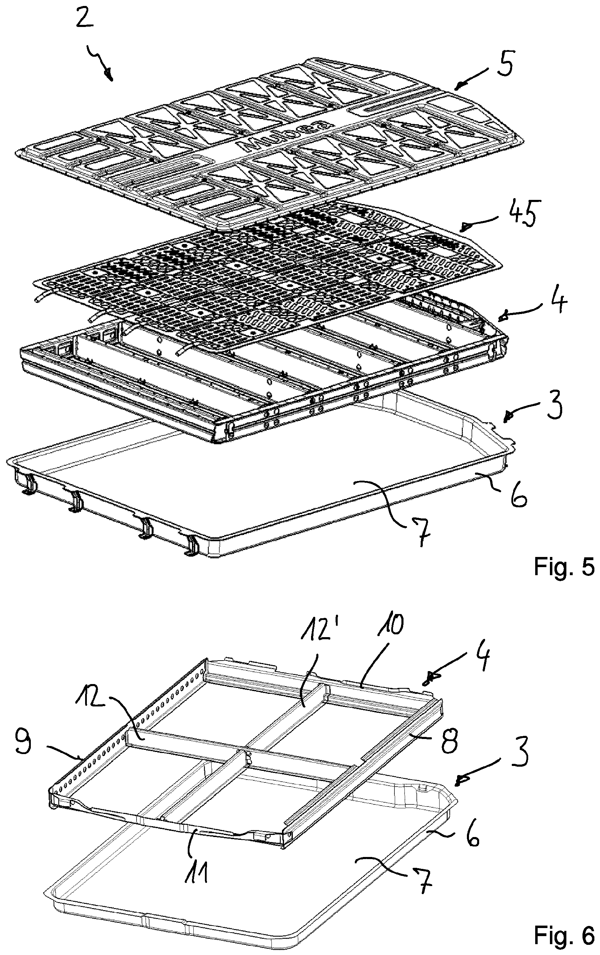

Die Figur 5 zeigt eine erfindungsgemäße Gehäuseanordnung 2 in einer weiteren Ausführungsform. Diese entspricht in weiten Teilen der Ausführungsform gemäß Figur 4, auf deren Beschreibung hinsichtlich der Gemeinsamkeiten insofern Bezug genommen wird. Dabei sind gleiche beziehungsweise einander entsprechende Bauteile mit gleichen Bezugszeichen versehen wie in den obigen Figuren 1 bis 4.

Die Besonderheit der vorliegenden Ausführungsform gemäß Figur 5 ist, dass die Bodenwanne 3 einteilig hergestellt ist, das heißt der Wannenrahmen 6 und der Boden 7 bilden ein Teil, das im Wege des Umformverfahrens aus einer Platine oder einem Platinenverbund hergestellt ist, insbesondere mittels Tiefziehen. Der Boden 7 hat in dieser Ausführung keine Kühlstruktur, sondern wird durch das tiefgezogene Blech gebildet. Um dennoch eine Kühlfunktion für die Batteriemodule bereitzustellen, ist ein oberer Kühlboden 45 vorgesehen, der auf den Strukturrahmen 4 aufgesetzt beziehungswiese zwischen diesem und dem Deckel 5 angeordnet ist. Eine einteilig hergestellte Bodenwanne 3 hat den Vorteil, dass keine Verbindungsstellen vorhanden sind. Die Befestigung der Gehäuseanordnung 2 an die Fahrzeugkarosserie kann bei dieser Ausführung beispielsweise über den umlaufenden Flansch des Wannenrahmens 6 erfolgen, wobei alternativ auch die in Figur 3 gezeigten Durchschraubungen möglich sind.

Die Figur 6 zeigt eine Ausführungsform mit einem modifizierten Strukturrahmen 4. Der Deckel und ist hier der Einfachheit halber nicht dargestellt. Die vorliegende Ausführungsform entspricht in weiten Teilen der Ausführungsform gemäß Figur 5, auf deren Beschreibung hinsichtlich der Gemeinsamkeiten insofern Bezug genommen wird. Dabei sind gleiche beziehungsweise einander entsprechende Bauteile mit gleichen Bezugszeichen versehen wie in den obigen Figuren 1 bis 5.

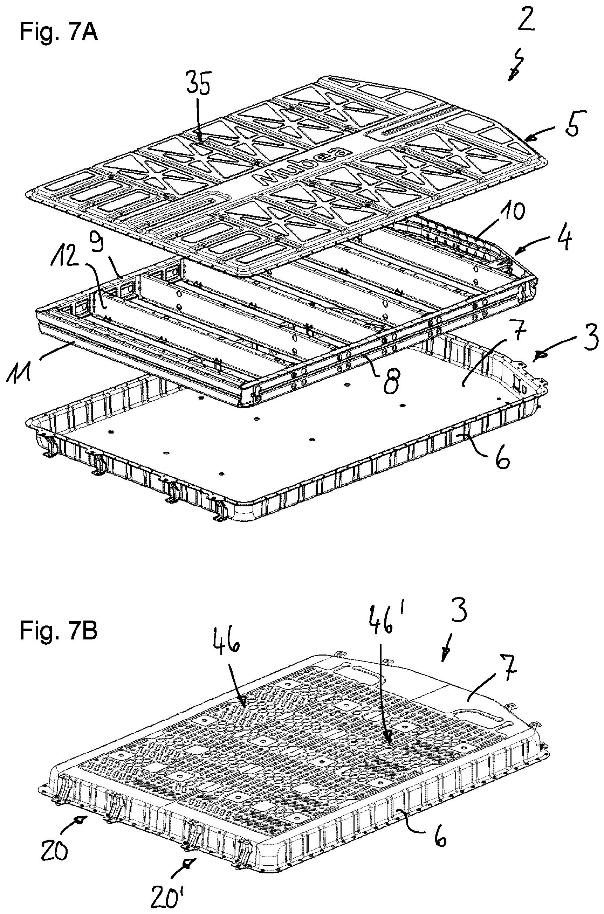

Eine Besonderheit der Ausführungsform gemäß Figur 6 ist, dass der Strukturrahmen 4 quer und längs verlaufende Verstärkungselemente 12, 12' aufweist, die sich zwischen den Rahmenelementen 8, 9, 10, 11 erstrecken, so dass insgesamt eine fensterartige Trägerstruktur gebildet ist. Die Bodenwanne 3 ist einteilig hergestellt, wobei Wannenrahmen 6 und Boden 7 ein Teil bilden, das mittels Umformen aus einer Platine oder einem Platinenverbund hergestellt ist, insbesondere mittels Tiefziehen. Der Boden 7 hat in dieser Ausführung keine Kühlstruktur und kann mit einem oben liegenden Kühlboden versehen werden, wie in Figur 5 gezeigt. Es versteht sich jedoch, dass der Boden 7 auch eine Kühlstruktur aufweisen kann, wie beispielhaft in Figur 7 gezeigt.

Die Figuren 7A und 7B, gemeinsam auch als Figur 7 bezeichnet, zeigen eine erfindungsgemäße Gehäuseanordnung 2 in einer weiteren Ausführungsform. Diese entspricht weitestgehend der Ausführungsform gemäß Figur 4, so dass hinsichtlich der Gemeinsamkeiten auf die obige Beschreibung Bezug genommen wird. Dabei sind gleiche beziehungsweise einander entsprechende Bauteile mit gleichen Bezugszeichen versehen wie in den obigen Figuren 1 bis 6.

Die Besonderheit der vorliegenden Ausführungsform gemäß Figur 7 ist, dass die Bodenwanne 3 einteilig hergestellt ist, das heißt der Wannenrahmen 6 und der Boden 7 bilden ein Teil, das im Wege des Umformverfahrens aus einem Platinenverbund aus zwei rollgebondeten Bodenelementen 20, 20' hergestellt ist, insbesondere mittels Tiefziehen. Boden 7 und Wannenrahmen 6 bilden bei dieser Ausführung eine integrale Bodenwanne 3, ohne Verbindungsstellen dazwischen. Wie insbesondere in Figur 7B erkennbar, umfasst die Bodenwanne 3 zwei miteinander verbundene, rollgebondete Bodenelementen 20, 20', und entsprechend zwei Kühlstrukturen 46, 46', wie oben beschrieben. Es ist aber auch eine Ausführung aus einem einzigen rollgebondeten Platinenverbund mit einer Kühlstruktur möglich.

Insgesamt haben die vorstehend beschriebenen Gehäuseanordnungen 2 mit umformend hergestelltem Wannenrahmen 6 den Vorteil einer hohen Dichtigkeit, da Schweißnähte im Nassbereich vermieden und damit die Sicherheit erhöht wird. Es kann eine funktionale Trennung zwischen einer reinen Dichtungs- und Korrosionsschutzfunktion einerseits und einer reinen strukturmechanischen Funktion erfolgen. Dabei wird die Dichtungs- und Korrosionsschutzfunktion von der Bodenwanne 3 übernommen, deren Blechdicke und Gewicht auf ein Minimum reduziert werden kann. Die strukturmechanische Funktion wird vom Strukturrahmen 4 übernommen, der von der Bodenwanne 3 und dem Deckel 5 abdichtend umschlossen ist und gegebenenfalls belastungsoptimiert mit variablen Blechdicken gestaltet sein kann, beispielsweise aus Tailor Rolled Blanks.

### Bezugszeichenliste

- 2: Gehäuseanordnung
- 3: Bodenwanne
- 4: Strukturrahmen
- 5: Deckel
- 6: Wannenrahmen
- 7: Boden
- 8: Rahmenelement
- 9: Rahmenelement
- 10: Rahmenelement
- 11: Rahmenelement
- 12: Verstärkungselement
- 13: Wandbereiche
- 14: Flanschbereich
- 15: Flanschbereich
- 16: Blechelement
- 17: Blechelement
- 18: Verbindungsbereich
- 19: Hohlbereich
- 20, 20': Bodenelement
- 21: Stützflansch
- 22: Kühlbereich
- 23: Verbindungsbereich
- 24: Anschluss
- 25: Anschluss
- 26: Flanschabschnitt
- 27: Flanschabschnitt
- 28: Wandabschnitt
- 29, 29': Flanschabschnitt
- 30, 30': Endflansch
- 31, 31': Schenkel
- 32: Bodenabschnitt
- 33: Gewinde
- 34: Durchgangsöffnung
- 35: Durchschraubungsanordnung
- 36: Innenhülse
- 37: Befestigungshülse
- 38: Befestigungshülse
- 39: Gehäuseinnenraum
- 40: Außenprofil
- 41: Innenprofil
- 42: Flanschabschnitt
- 43: Flanschabschnitt
- 44: Öffnung
- 45: Kühlboden
- 46, 46': Kühlstruktur

- d6: Dicke

## Patentansprüche

1. Gehäuseanordnung zur Aufnahme elektrischer Speichermittel für einen Elektroantrieb eines elektrisch antreibbaren Kraftfahrzeugs, umfassend:
eine Bodenwanne (3) mit einem Boden (7) und einem umlaufend geschlossenen Wannenrahmen (6), der aus einem metallischen Werkstoff durch Umformen hergestellt ist;
einen Strukturrahmen (4), der mehrere zu einem umlaufenden Rahmen miteinander verbundene Rahmenelemente (8, 9, 10, 11) und mehrere sich zwischen zwei Rahmenelementen (8, 9) erstreckende Verstärkungselemente (12) umfasst, wobei die Rahmenelemente (8, 9, 10, 11) und die Verstärkungselemente (12) jeweils aus einem Stahlwerkstoff hergestellt und miteinander zu dem Strukturrahmen (4) verbunden sind, und wobei der Strukturrahmen (4) mit der Bodenwanne (3) verbunden ist;
wobei die Streckgrenze des Stahlwerkstoffs der Rahmenelemente (8, 9, 10, 11) und Verstärkungselemente (12) mindestens 10 % größer ist als die Streckgrenze des metallischen Werkstoffs des Wannenrahmens (6);
einen Deckel (5), der mit dem Wannenrahmen (6) lösbar verbindbar ist, wobei der Wannenrahmen (6) und der Deckel (5) einen Aufnahmeraum für elektrische Speichermittel einschließen,
**dadurch gekennzeichnet,**
**dass** der Strukturrahmen (4) in der Bodenwanne (3) innerhalb des Wannenrahmens (6) angeordnet ist.

2. Gehäuseanordnung nach Anspruch 1,
**dadurch gekennzeichnet,**
**dass** die Bodenwanne (3) zweiteilig hergestellt ist, wobei der Wannenrahmen (6) mit dem Boden (7) abdichtend verbunden ist, wobei der Boden (7) eine integrierte Kühlstruktur aufweist, durch die ein Kühlmittel hindurchströmen kann, und
wobei der Boden (7) aus mehreren mittels Rollbonding miteinander verbundenen Aluminiumblechen (16, 17) hergestellt ist, die durch Walzen in Verbindungsbereichen (18) miteinander verbunden sind und in Hohlbereichen (19) voneinander beabstandet sind, welche die Kühlstruktur bilden.

3. Gehäuseanordnung nach Anspruch 1 oder 2,
**dadurch gekennzeichnet,**
**dass** der Wannenrahmen (6) im Querschnitt betrachtet ein Z-förmiges Profil aufweist, wobei sich der Wannenrahmen (6) ausgehend von einem unteren Flanschbereich (14), über einen daran anschließenden Wandbereich (13) in Richtung eines oberen Flanschbereichs (15) erweitert,
wobei der obere Flanschbereich (15) eine ebene Dichtfläche zum abdichtenden Verbinden mit einer Gegenfläche des Deckels (5) bildet, und/oder wobei der untere Flanschbereich (14) eine ebene Dichtfläche zum abdichtenden Verbinden mit einer Gegenfläche des Bodens (7) bildet.

4. Gehäuseanordnung nach einem der Ansprüche 1 bis 3,
**dadurch gekennzeichnet,**
**dass** der Wannenrahmen (6) aus einem metallischen Werkstoff mit einer Streckgrenze (Rp0,2) von weniger als 450 MPa hergestellt ist, insbesondere aus Aluminium oder einer Aluminiumlegierung.

5. Gehäuseanordnung nach einem der Ansprüche 1 bis 4,
**dadurch gekennzeichnet,**
**dass** die Bodenwanne (3) aus Wannenrahmen (6) und Boden (7) einteilig mittels Umformen hergestellt ist, insbesondere mittels Tiefziehen.

6. Gehäuseanordnung nach einem der Ansprüche 1 bis 5,
**dadurch gekennzeichnet,**
**dass** zumindest einige der Verstärkungselemente (12) eingebrachte Gewinde (33) zur Befestigung des Deckels (5) und/oder von zwischen den Verstärkungselementen (12) einsetzbaren Batteriemodulen aufweisen, wobei die eingeformten Gewinde (33) insbesondere durch Loch-, Tiefzieh-, Präge- und/oder Schneidprozesse hergestellt sind.

7. Gehäuseanordnung nach einem der Ansprüche 1 bis 6,
**dadurch gekennzeichnet,**
**dass** mehrere Durchschraubungsanordnungen (35) vorgesehen sind, um die Gehäuseanordnung (2) an einer Fahrzeugkarosserie zu befestigen.

8. Gehäuseanordnung nach einem der Ansprüche 1 bis 7,
**dadurch gekennzeichnet,**
**dass** zumindest einige der Verstärkungselemente (12) eine variable Blechdicke über einer längsten Länge des jeweiligen Verstärkungselements aufweisen, wobei die Blechdicke insbesondere im Bereich der eingebrachten Gewinde (33) und/oder an endseitigen Befestigungsabschnitten erhöht ist.

9. Gehäuseanordnung nach einem der Ansprüche 1 bis 8,
**dadurch gekennzeichnet,**
**dass** zumindest einige der Rahmenelemente (8, 9, 10, 11) des Strukturrahmens (4) aus einem martensitisch härtbaren Stahl durch Warmumformen hergestellt sind, insbesondere aus 22MnB5.

10. Gehäuseanordnung nach einem der Ansprüche 1 bis 9,
**dadurch gekennzeichnet,**
**dass** zumindest einige der Rahmenelemente (8, 9, 10, 11) des Strukturrahmens (4) mit einer Korrosionsschutzschicht versehen sind, insbesondere aus einer Aluminiumlegierung.

11. Gehäuseanordnung nach einem der Ansprüche 1 bis 10,
**dadurch gekennzeichnet,**
**dass** zumindest einige der Rahmenelemente (8, 9, 10, 11) des Strukturrahmens (4) eine variable Blechdicke über einer längsten Länge des jeweiligen Rahmenelements aufweisen.

12. Gehäuseanordnung nach einem der Ansprüche 1 bis 11,
**dadurch gekennzeichnet,**
**dass** zumindest einige der Verstärkungselemente (12) des Strukturrahmens (4) aus einem kaltgewalzten Stahl mit einer Streckgrenze von maximal 550 MPa mittels Kaltumformung hergestellt sind.

13. Gehäuseanordnung nach einem der Ansprüche 1 bis 12,
**dadurch gekennzeichnet,**
**dass** zumindest einige der Verstärkungselemente (12) des Strukturrahmens (4) mit einer Korrosionsschutzschicht versehen sind, insbesondere aus einer Zinklegierung.

14. Gehäuseanordnung nach einem der Ansprüche 1 bis 13,
**dadurch gekennzeichnet,**
**dass** zumindest einige der Rahmenelemente (8, 9, 10, 11) des Strukturrahmens (4) in Form eines Hohlprofils aus einem C-förmigen Außenprofil (40) und einem hiermit verbundenen C-förmigen Innenprofil (41) gestaltet sind.

15. Gehäuseanordnung nach einem der Ansprüche 1 bis 14,
**dadurch gekennzeichnet,**
**dass** der Wannenrahmen (6) aus Blechmaterial mit einer Bruchdehnung (A50) von mindestens 15 % und einer mittleren Blechdicke von weniger als 3,0 mm, insbesondere weniger als 1,4 mm hergestellt ist.

## Claims

1. Housing assembly for accommodating electrical storage means for an electric drive of an electrically drivable motor vehicle, comprising:
a base tray (3) with a base (7) and a circumferentially closed tray frame (6), which is produced from a metallic material by forming;
a structural frame (4) which comprises a plurality of frame elements (8, 9, 10, 11) connected to each other to form a circumferential frame and a plurality of reinforcing elements (12) extending between two frame elements (8, 9), wherein the frame elements (8, 9, 10, 11) and the reinforcing elements (12) are each made of a steel material and are connected to each other to form the structural frame (4), and wherein the structural frame (4) is connected to the base tray (3);
wherein the yield strength of the steel material of the frame elements (8, 9, 10, 11) and reinforcing elements (12) is at least 10 % greater than the yield strength of the metallic material of the tray frame (6);
a cover (5) which is releasably connectable to the tray frame (6), wherein the tray frame (6) and the cover (5) enclose a receiving space for electrical storage means,
**characterised in**
**that** the structural frame (4) is arranged in the base tray (3) inside the tray frame (6).

2. Housing assembly according to claim 1,
**characterised in**
**that** the base tray (3) is produced in two parts, wherein the tray frame (6) is sealingly connected to the base (7), wherein the base (7) including an integrated cooling structure through which a coolant can flow, and
wherein the base (7) is produced from a plurality of aluminium sheets (16, 17) joined by roll bonding, which by rolling are bonded to each other in bonding regions (18) and spaced apart from each other in hollow regions (19), which form the cooling structure.

3. Housing assembly according to claim 1 or 2,
**characterised in**
**that** the tray frame (6) has a Z-shaped profile when viewed in cross-section, wherein the tray frame (6) extends from a lower flange region (14) via an adjoining wall region (13) in direction of an upper flange region (15), wherein the upper flange region (15) forms a flat sealing face for sealing connection to a counter face of the cover (5), and/or
wherein the lower flange region (14) forms a flat sealing face for sealing connection with a counter face of the base (7)..

4. Housing assembly according to any one of claims 1 to 3,
**characterised in**
**that** the tray frame (6) is made of a metallic material with a yield strength (Rp0.2) of less than 450 MPa, in particular aluminium or an aluminium alloy.

5. Housing assembly according to any one of claims 1 to 4,
**characterised in**
**that** the base tray (3) comprising the tray frame (6) and base (7) is produced in one piece by forming, in particular by deep drawing.

6. Housing assembly according to any one of claims 1 to 5,
**characterised in**
**that** at least some of the reinforcing elements (12) have incorporated threads (33) for fastening the cover (5) and/or battery modules insertable between the reinforcing elements (12), wherein the incorporated threads (33) are produced in particular by punching, deep-drawing, embossing and/or cutting processes.

7. Housing assembly according to any one of claims 1 to 6,
**characterised in**
**that** a plurality of through-bolt assemblies (35) are provided in order to fasten the housing assembly (2) to a vehicle body.

8. Housing assembly according to any one of claims 1 to 7,
**characterised in**
**that** at least some of the reinforcing elements (12) have a variable sheet thickness over a longest length of the respective reinforcing element, with the sheet thickness being increased in particular in the region of the incorporated threads (33) and/or at end-side connecting portions.

9. Housing assembly according to any one of claims 1 to 8,
**characterised in**
**that** at least some of the frame elements (8, 9, 10, 11) of the structural frame (4) are produced from a martensitically hardenable steel by hot forming, in particular from 22MnB5.

10. Housing assembly according to any one of claims 1 to 9,
**characterised in**
**that** at least some of the frame elements (8, 9, 10, 11) of the structural frame (4) are provided with an anti-corrosion coating, in particular of an aluminium alloy.

11. Housing assembly according to any one of claims 1 to 10,
**characterised in**
**that** at least some of the frame elements (8, 9, 10, 11) of the structural frame (4) have a variable sheet thickness over a longest length of the respective frame element.

12. Housing assembly according to any one of claims 1 to 11,
**characterised in**
**that** at least some of the reinforcing elements (12) of the structural frame (4) are produced from a cold-rolled steel with a yield strength of at most 550 MPa by cold forming.

13. Housing assembly according to any one of claims 1 to 12,
**characterised in**
**that** at least some of the reinforcing elements (12) of the structural frame (4) are provided with an anti-corrosion coating, in particular of a zinc alloy.

14. Housing assembly according to any one of claims 1 to 13,
**characterised in**
**that** at least some of the frame elements (8, 9, 10, 11) of the structural frame (4) are designed in the form of a hollow profile comprising a C-shaped outer profile (40) and a C-shaped inner profile (41) connected thereto.

15. Housing assembly according to any one of claims 1 to 14,
**characterised in**
**that** the tray frame (6) is made of sheet material with an elongation at break (A50) of at least 15 % and an average sheet thickness of less than 3.0 mm, in particular less than 1.4 mm.

## Revendications

1. Ensemble boîtier pour recevoir des moyens d'accumulation électrique pour un entraînement électrique d'un véhicule automobile à propulsion électrique, comprenant :
un bac de fond (3) avec un fond (7) et un cadre de bac (6) fermé sur le pourtour, qui est fabriqué par formage à partir d'un matériau métallique ;
un cadre structurel (4) qui comprend plusieurs éléments de cadre (8, 9, 10, 11) reliés entre eux pour former un cadre périphérique et plusieurs éléments de renforcement (12) s'étendant entre deux éléments de cadre (8, 9), les éléments de cadre (8, 9, 10, 11) et les éléments de renforcement (12) étant chacun fabriqués à partir d'un matériau en acier et reliés entre eux pour former le cadre structurel (4), et le cadre structurel (4) étant relié au bac de fond (3) ;
la limite d'élasticité du matériau en acier des éléments de cadre (8, 9, 10, 11) et des éléments de renforcement (12) étant supérieure d'au moins 10 % à la limite d'élasticité du matériau métallique du cadre de la cadre de bac (6) ;
un couvercle (5) qui peut être relié de manière amovible au cadre de bac (6), le cadre de bac (6) et le couvercle (5) enfermant un espace de réception pour des moyens d'accumulation électriques,
**caractérisé en ce**
**que** le cadre structurel (4) est disposé dans le bac de fond (3) à l'intérieur du cadre de bac (6).

2. Ensemble boîtier selon la revendication 1,
**caractérisé en ce**
**que** le bac de fond (3) est fabriqué en deux parties, le cadre de bac (6) étant relié de manière étanche au fond (7), le fond (7) présentant une structure de refroidissement intégrée à travers laquelle un agent de refroidissement peut s'écouler, et
le fond (7) étant fabriqué à partir de plusieurs tôles d'aluminium (16, 17) reliées entre elles par collage au rouleau (roll bonding), qui sont reliées entre elles par laminage dans des zones de liaison (18) et sont espacées les unes des autres dans des zones creuses (19), qui forment la structure de refroidissement.

3. Ensemble boîtier selon la revendication 1 ou 2,
**caractérisé en ce**
**que** le cadre de bac (6) présente, vu en coupe transversale, un profil en forme de Z, le cadre de bac (6) s'élargissant, à partir d'une zone de bride inférieure (14), en direction d'une zone de bride supérieure (15), en passant par une zone de paroi (13) qui s'y raccorde,
la zone de bride supérieure (15) formant une surface d'étanchéité plane pour une liaison étanche avec une contre-surface du couvercle (5), et/ou la partie de bride inférieure (14) formant une surface d'étanchéité plane destinée à être reliée de manière étanche à une surface opposée du fond (7).

4. Ensemble boîtier selon l'une quelconque des revendications 1 à 3,
**caractérisé en ce**
**que** le cadre de bac (6) est fabriqué en un matériau métallique ayant une limite d'élasticité (Rp0,2) inférieure à 450 MPa, en particulier en aluminium ou en un alliage d'aluminium.

5. Ensemble boîtier selon l'une quelconque des revendications 1 à 4,
**caractérisé en ce**
**que** le bac de fond (3) est fabriqué d'une seule pièce à partir du cadre de bac (6) et du fond (7) par formage, en particulier par emboutissage profond.

6. Ensemble boîtier selon l'une quelconque des revendications 1 à 5,
**caractérisé en ce**
**qu'**au moins quelques-uns des éléments de renforcement (12) présentent des filetages (33) incorporés pour la fixation du couvercle (5) et/ou de modules de batterie insérables entre les éléments de renforcement (12), les filetages (33) formés étant fabriqués en particulier par des processus de perforation, d'emboutissage profond, d'estampage et/ou de découpe.

7. Ensemble boîtier selon l'une quelconque des revendications 1 à 6,
**caractérisé en ce**
**que** plusieurs agencements de vissage (35) sont prévus pour fixer l'ensemble boîtier (2) à une carrosserie de véhicule.

8. Ensemble boîtier selon l'une quelconque des revendications 1 à 7,
**caractérisé en ce**
**qu'**au moins quelques-uns des éléments de renforcement (12) présentent une épaisseur de tôle variable sur une longueur la plus longue de l'élément de renforcement respectif, l'épaisseur de tôle étant notamment augmentée dans la zone des filetages (33) insérés et/ou sur des sections de fixation d'extrémité.

9. Ensemble boîtier selon l'une quelconque des revendications 1 à 8,
**caractérisé en ce**
**qu'**au moins quelques-uns des éléments de cadre (8, 9, 10, 11) du cadre structurel (4) sont fabriqués en un acier martensitiquement durcissable par formage à chaud, en particulier en 22MnB5.

10. Ensemble boîtier selon l'une quelconque des revendications 1 à 9,
**caractérisé en ce**
**qu'**au moins quelques-uns des éléments de cadre (8, 9, 10, 11) du cadre structurel (4) sont pourvus d'une couche de protection contre la corrosion, en particulier en un alliage d'aluminium.

11. Ensemble boîtier selon l'une quelconque des revendications 1 à 10,
**caractérisé en ce**
**qu'**au moins quelques-uns des éléments de cadre (8, 9, 10, 11) du cadre structurel (4) ont une épaisseur de tôle variable sur une longueur la plus longue de l'élément de cadre respectif.

12. Ensemble boîtier selon l'une quelconque des revendications 1 à 11,
**caractérisé en ce**
**qu'**au moins quelques-uns des éléments de renforcement (12) du cadre structurel (4) sont fabriqués à partir d'un acier laminé à froid ayant une limite d'élasticité de 550 MPa au maximum, par formage à froid.

13. Ensemble boîtier selon l'une quelconque des revendications 1 à 12,
**caractérisé en ce**
**qu'**au moins quelques-uns des éléments de renforcement (12) du cadre structurel (4) sont pourvus d'une couche de protection contre la corrosion, en particulier en un alliage de zinc.

14. Ensemble boîtier selon l'une quelconque des revendications 1 à 13,
**caractérisé en ce**
**qu'**au moins quelques-uns des éléments de cadre (8, 9, 10, 11) du cadre structurel (4) sont conçus sous la forme d'un profilé creux constitué d'un profilé extérieur (40) en forme de C et d'un profilé intérieur (41) en forme de C relié à celui-ci.

15. Ensemble de boîtier selon l'une quelconque des revendications 1 à 14,
**caractérisé en ce**
**que** le cadre de bac (6) est fabriqué à partir d'un matériau en tôle ayant un allongement à la rupture (A50) d'au moins 15 % et une épaisseur moyenne de tôle inférieure à 3,0 mm, en particulier inférieure à 1,4 mm.
